**Europäisches Patentamt**

**European Patent Office**

**Office européen des brevets**

(19)

(11) Numéro de publication: **0 150 146 B1**

(12) **FASCICULE DE BREVET EUROPEEN**

(45) Date de publication du fascicule du brevet:
**22.06.88**

(51) Int. Cl.⁴: **A 01 N 1/02**

(21) Numéro de dépôt: **85400052.8**

(22) Date de dépôt: **11.01.85**

(54) Dispositif de congélation de produits biologiques conditionnés en paillettes.

(30) Priorité: **19.01.84 FR 8400791**

(43) Date de publication de la demande:
**31.07.85 Bulletin 85/31**

(45) Mention de la délivrance du brevet:
**22.06.88 Bulletin 88/25**

(84) Etats contractants désignés:
**AT BE CH DE FR GB IT LI LU NL SE**

(56) Documents cités:
**FR - A - 2 455 718**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cédex 07 (FR)**

(72) Inventeur: **Angelier, Nicole, 9, allée Maurice Ravel, F-38130 Echirolles (FR)**
Inventeur: **Colomb, François, 3, place Vaucanson, F-38000 Grenoble (FR)**

(74) Mandataire: **Leclercq, Maurice et al, L'AIR LIQUIDE SOCIETE ANONYME POUR L'ETUDE ET L'EXPLOITATION DES PROCEDES GEORGES CLAUDE 75, Quai d'Orsay, F-75321 Paris Cedex 07 (FR)**

## Description

L'invention concerne un dispositif de congélation de produits biologiques conditionnés en paillettes, comprenant une enceinte d'isolation thermique à porte d'accès, un chariot-support pour paillettes biologiques adapté à recevoir desdites paillettes parallèlement les unes aux autres, des moyens de refroidissement régulé faisant intervenir un injecteur d'azote liquide, le cas échéant un moyen de chauffage à régulation fine dudit refroidissement, un moyen de brassage de l'atmosphère gazeuse.

Dans ce genre de dispositif, le passage de l'état liquide à l'état solide, ou cristallisation, est toujours précédé d'une surfusion qui peut se prolonger à des températures relativement basses nettement inférieures à la température théorique de congélation, selon l'état du produit biologique et la présence ou l'absence de germe cristallin; elle ne peut donc être déterminée de façon précise avec les congélateurs programmables existants et l'on a proposé d'assurer l'initiation de cette cristallisation par un choc mécanique ou thermique inducteur de cristallisation et cela à une température froide bien précise permettant d'assurer la meilleure survie des produits biologiques. En général, on assure un choc thermique au niveau des paillettes par la mise en contact manuelle pendant un bref laps de temps d'un doigt froid initiateur de cristallisation. Cette opération est faite manuellement et cela présente une perte de temps, ainsi que certaines difficultés, car il convient, par exemple dans le cas d'embryons, de ne pas agir directement sur l'embryon lui-même. De plus, il est nécessaire d'ouvrir l'enceinte de congélation, ce qui perturbe tout le cycle de refroidissement.

L'objet de la présente invention est d'automatiser un choc mécanique ou thermique d'induction de la cristallisation à une température déterminée, de manière à éviter une surfusion excessive. Un autre objet de l'invention qui s'applique plus particulièrement à la congélation d'embryons qui sont immergés dans une solution cryoprotectrice en un endroit longitudinalement déterminé d'une paillette, est de mettre en œuvre un choc thermique inducteur de la cristallisation à un tel endroit longitudinalement déterminé pour chaque paillette de conditionnement.

Le dispositif de congélation selon l'invention incorpore un inducteur de cristallisation de forme allongée associé à des moyens déplaceurs dudit inducteur, qui déplacent ledit inducteur depuis un berceau-récepteur de refroidissement profond jusqu'à une position transversale en appui sur lesdites paillettes.

Selon une forme de réalisation, l'inducteur de cristallisation est une barrette métallique portée par des bras déplaceurs et les bras déplaceurs sont montés sur un arbre traversant la paroi d'enceinte et mû par un moteur.

De préférence, le moyen déplaceur est agencé de façon que le déplacement terminal vers le support de paillettes de l'inducteur de cristallisation s'effectue de haut en bas. Le berceau-récepteur incorpore un tube échangeur branché en série avec le conduit d'alimentation en azote liquide pour l'injecteur, ledit conduit incorporant une vanne commune d'alimentation-arrêt. Avantageusement, une sonde thermique sous forme d'un fil flexible est adaptée à être engagée à l'intérieur d'une paillette. Le chariot-support pour paillettes est agencé de façon que les paillettes soient horizontales et selon une forme particulière de réalisation, le chariot-support pour paillettes est monté à coulissement réglé selon la direction longitudinale des paillettes.

L'invention est maintenant décrite en référence aux dessins annexés dans lesquels:

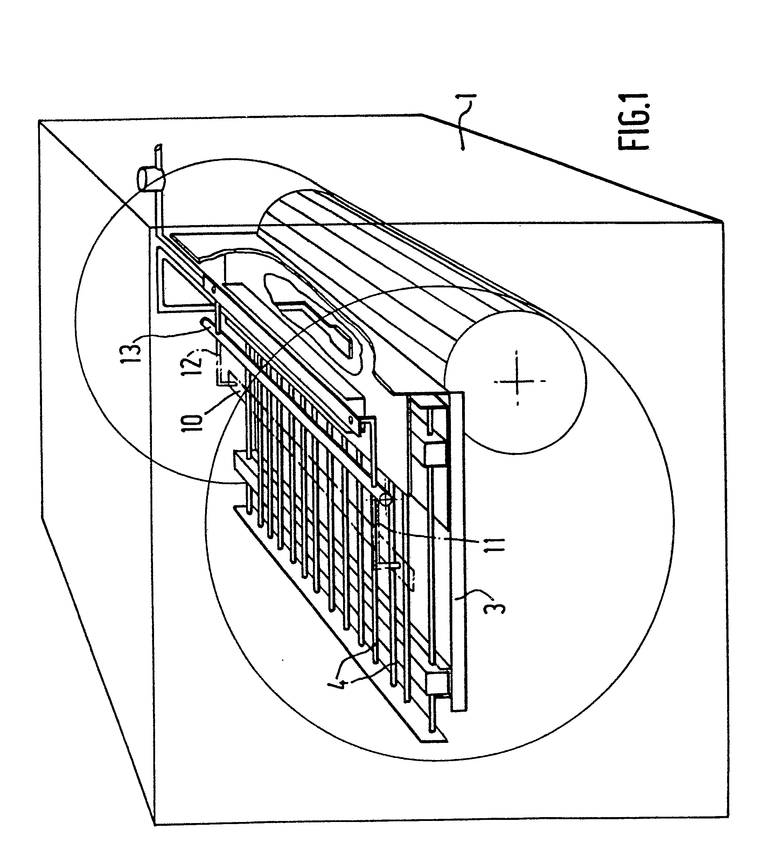

 – la figure 1 est une vue en perspective du dispositif;
 – la figure 2 est une vue en coupe verticale;

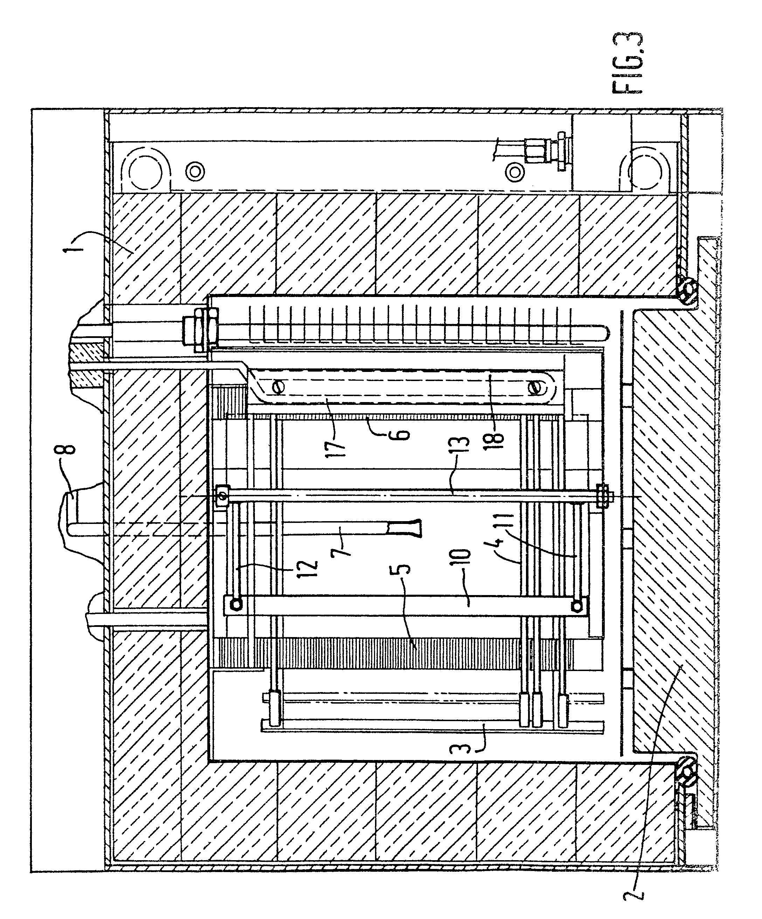

 – la figure 3 est une vue en coupe horizontale;

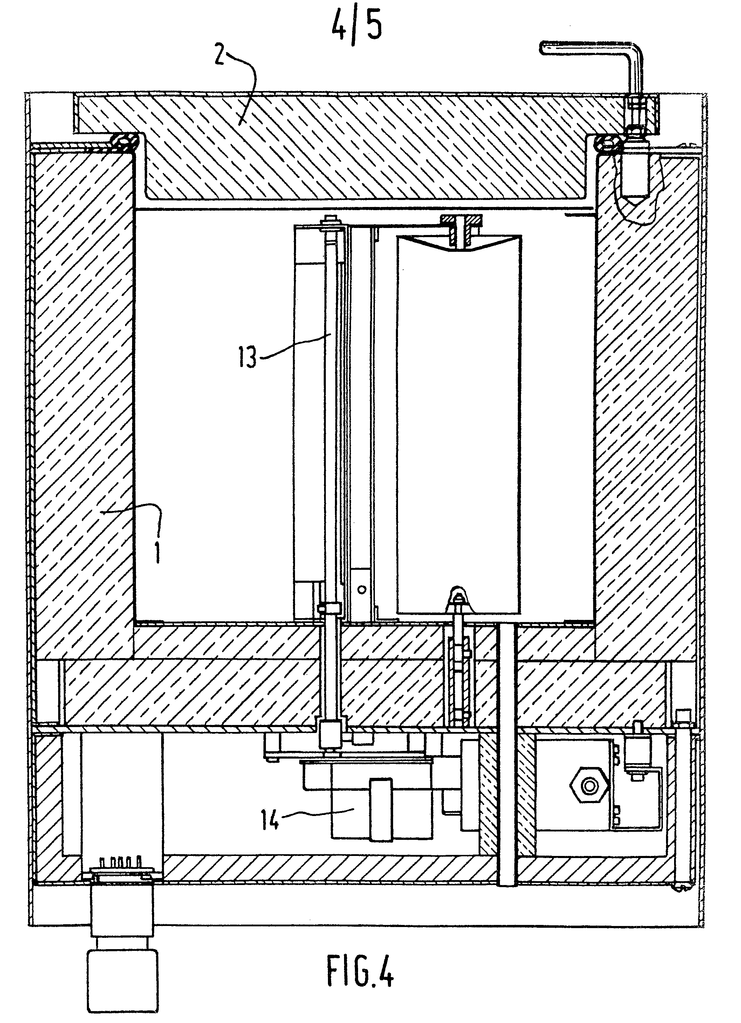

 – la figure 4 est une autre vue en coupe horizontale; et
 – la figure 5 est une vue agrandie d'une partie de la figure 2.

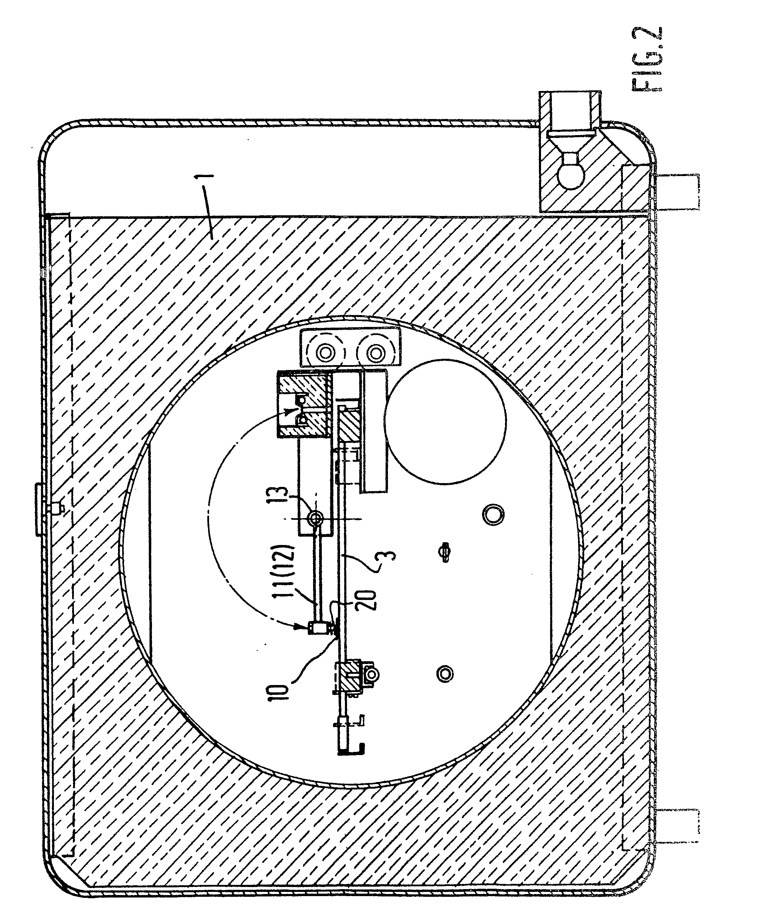

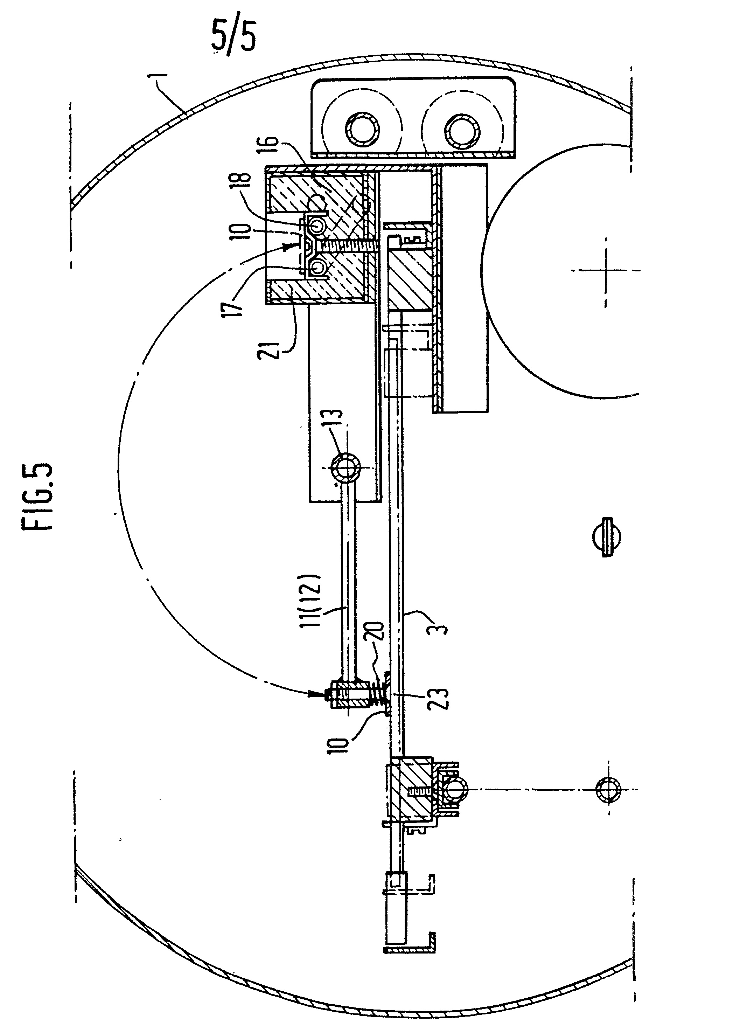

En se référant aux dessins annexés, un dispositif de congélation selon l'invention comporte une enceinte d'isolation thermique 1 équipée d'une porte d'accès 2, dans laquelle est monté un chariot-support 3 pour des paillettes biologiques 4 agencées parallèlement les unes aux autres par engagement dans deux crémaillères transversales 5 et 6 du chariot-support 3. L'enceinte incorpore également un injecteur d'azote liquide 7 alimenté en azote liquide par une tubulure 8 à vanne. A l'intérieur de l'enceinte est monté un inducteur de cristallisation constitué d'une barrette métallique 10 à extension transversale par rapport au chariot-support 3 solidaire par ressorts 20 de deux bras déplaceurs 11 et 12 qui sont montés sur un arbre 13 en traversant la paroi d'enceinte et qui peut être entraîné à rotation par un moteur 14. À une extrémité du débattement rotatif de 180° de l'arbre 13, la barrette d'induction de cristallisation 10 vient en appui supérieur sur le jeu des paillettes 4 (cf. figures 2 et 5) de façon à provoquer, à certains endroits déterminés des paillettes, un choc thermique initiateur de la cristallisation. À l'autre extrémité du débattement, la barrette d'induction de cristallisation 10 vient en appui sur un berceau-récepteur 16 avec une paroi isolée 21 sur le fond duquel est logé un conducteur en boucle 17 et 18 alimenté en série avec la tubulure 8 en aval de la vanne d'alimentation-arrêt 9. On comprend ainsi que dans la position d'attente, où la barrette de cristallisation 10 est en appui dans le berceau-récepteur 16, elle se refroidit pratiquement à la température de l'azote liquide et que pendant le bref laps de temps où elle vient en appui contre les paillettes 4, qui sont à la température régnant à l'intérieur de l'enceinte, de l'ordre de quelques degrés en dessous de 0°, cette barrette 10 provoque un choc thermique sur le produit à l'intérieur de chaque paillette 4, déclenchant ainsi un début de la cristallisation. Cet appui en contact de la barrette 10 sur les paillettes 4 dure généralement de quelques dizième de secondes à quelques secondes.

Dans certains cas, lorsqu'il s'agit de produit biologique réparti sur toute la longueur des paillettes, l'endroit longitudinal où se produit le choc thermique est peu important mais, dans d'autre cas, notamment lorsqu'il s'agit d'embryons qui sont logés dans un segment liquide cryoprotecteur en un endroit longitudinal précis de chaque paillette, alors que les parties restantes des paillettes de part et d'autre dudit segment liquide cryoprotecteur sont remplies par un autre liquide qui est séparé du liquide cryoprotecteur par deux bulles d'air, il convient que le choc thermique ait lieu précisément à l'endroit du liquide cryoprotecteur et au-dessus des paillettes, de façon à ne pas porter atteinte à l'embryon qui repose au fond e la paillette. Cette double condition conduit, dans ce genre d'application, à prévoir que la venue en contact de la barrette d'induction de cristallisation s'effectue sur le dessus de toutes les paillettes et non pas en dessous d'une part et que les paillettes doivent toutes être réglées longitudinalement en position sur le chariot-support pour que le segment de liquide cryoprotecteur soit sur la trajectoire d'impact de la barrette. A cet effet, le chariot-support 3 est monté à déplacement longitudinal réglable par l'intermédiaire d'une tige 23 coopérant avec une vis de réglage. De même, il convient de surveiller et de commander très précisément la température à l'intérieur de l'enceinte et, à cet effet, on a disposé dans une paillette de fond une sonde thermométrique qui est constituée d'un fil souple raccordé à l'extérieur au programmateur. De la sorte, on peut être assuré que la température relevée dans cette paillette, qui incorpore seulement du liquide cryoprotecteur, est représentative de la température des produits biologiques dans toutes les autres paillettes.

L'invention concerne les produits biologiques conditionnés en paillettes, en vue d'être congelés et stockés avec de l'azote liquide, et plus particulièrement les cellules sanguines, les spermes humains et animaux, les fragments de tissus biologiques, les embryons de différentes origines animales, etc . . .

## Revendications

1. Dispositif de congélation de produits biologiques conditionnés en paillettes (4) comprenant une enceinte d'isolation thermique (1) à porte d'accès (2), un chariot-support (3) pour paillettes biologiques adapté à recevoir lesdites paillettes (4) parallèlement les unes aux autres, des moyens de refroidissement régulé faisant intervenir un injecteur d'azote liquide (7), le cas échéant un moyen de chauffage à régulation fine dudit refroidissement, un moyen de brassage de l'atmosphère gazeuse, caractérisé en ce qu'il incorpore un inducteur de cristallisation de forme allongée (10) associé à des moyens déplaceurs (11–12) dudit inducteur qui déplacent ledit inducteur depuis un berceau-récepteur de refroidissement profond (16) jusqu'à une position transversale en appui sur lesdites paillettes (4).

2. Dispositif de congélation de produits biologiques conditionnés en paillettes selon la revendication 1, caractérisé en ce que l'inducteur de cristallisation est une barrette métallique (10) portée par des bras déplaceurs (11–12).

3. Dispositif de congélation de produits biologiques conditionnés en paillettes selon la revendication 2, caractérisé en ce que les bras déplaceurs (11–12) sont montés sur un arbre (13) traversant la paroi d'enceinte (1) et mû par un moteur (14).

4. Dispositif de congélation de produit biologiques conditionnés en paillettes selon l'une quelconque des revendications 1 à 3, caractérisé en ce que les moyens déplaceurs (11–12 et 13–14) sont agencés de façon que le déplacement terminal vers le support (3) de paillettes (4) de l'inducteur de cristallisation (10) s'effectue de haut en bas.

5. Dispositif de congélation de produits biologiques conditionnés en paillettes selon l'une quelconque des revendications 1 à 4, caractérisé en ce que le berceau-récepteur (16) incorpore un tube échangeur (17–18) branché en série avec le conduit d'alimentation en azote liquide (8) pour l'injecteur (7), ledit conduit incorporant un vanne commune d'alimentation-arrêt.

6. Dispositif de congélation de produits biologiques conditionnés en paillettes selon l'une quelconque des revendications 1 à 5, caractérisé en ce qu'une sonde thermique sous forme d'un fil flexible est adaptée à être engagée à l'intérieur d'un paillette.

7. Dispositif de congélation de produits biologiques conditionnés en paillettes selon la revendication 1, caractérisé en ce que le chariot-support (3) pour paillettes (4) est agencé de façon que les paillettes (4) soient horizontales.

8. Dispositif de congélation de produits biologiques selon l'une quelconque des revendications 1, 2, 4, 7, caractérisé en ce que le chariot-suport (3) pour les paillettes (4) est monté à coulissement réglé (23) selon la direction longitudinale des paillettes (4).   .

## Patentansprüche

1. Vorrichtung zum Einfrieren von biologischen Produkten, die in Strohhälmchen (4) verpackt sind, mit einem thermisch isolierten Raum (1) mit Zugangstor (2), einem Wagenträger (3) für biologische Strohhälmchen, der geeignet ist zur Aufnahme dieser Strohhälmchen (4) parallel zueinander, regulierten Kühlmitteln, die einen Injektor für flüssigen Stickstoff (7) einwirken lassen, gegebenenfalls einem Heizmittel mit Freinregulierung für diese Kühlung, und einem Rührmittel für die gasförmige Atmosphäre, dadurch gekennzeichnet, dass sie einen Kristallisationsinduktor länglicher Form (10) aufweist, welcher Verschiebemitteln (11–12) dieses Induktors zugeordnet ist, welche den Induktor von einem Gestellempfänger für tiefe Kühlung (16) bis zu einer transversalen Position in Abstützung auf den Strohhälmchen (4) verschieben.

2. Einfriervorrichtung für biologische Produkte, die in Strohhälmchen (4) verpackt sind, gemäss Anspruch 1, dadurch gekennzeichnet, dass der Kristallisationsinduktor ein metallischer Steg (10) ist, welcher durch Verschiebearme (11–12) getragen ist.

3. Einfriervorrichtung für biologische Produkte, die in Strohhälmchen verpackt sind, gemäss Anspruch 2, dadurch gekennzeichnet, dass die Verschiebearme (11–12) auf einer Achse (13) montiert sind, welche die Wand des Raumes (10) durchquert und von einem Motor (14) bewegt ist.

4. Vorrichtung zum Einfrieren biologischer Produkte, die in Strohhälmchen verpackt sind, gemäss einem der Ansprüche 1 bis 3, dadurch gekennzeichnet, dass die Verschiebemittel (11–12 und 13–14) so angeordnet sind, dass die Endverschiebung zum Träger (3) für die Strohhälmchen (4) des Kristallisationsinduktors (10) von oben nach unten erfolgt.

5. Einfriervorrichtung für biologische Produkte, die in Strohhälmchen verpackt sind, gemäss einem der Ansprüche 1 bis 4, dadurch gekennzeichnet, dass der Gestellempfänger (16) einen Rohraustauscher (17–18) enthält, der in Reihe mit der Versorgungsleitung für flüssigen Stickstoff (8) für den Injektor (7) geschaltet ist, wobei diese Leitung ein gemeinsames Ventil für das Anhalten der Versorgung aufweist.

6. Vorrichtung zum Einfrieren biologischer Produkte, die in Strohhälmchen verpackt sind, gemäss einem der Ansprüche 1 bis 5, dadurch gekennzeichnet, dass eine thermische Sonde in Form eines flexiblen Drahtes geeignet ist, in das Innere eines Strohhälmchens eingebracht zu werden.

7. Vorrichtung zum Einfrieren biologischer Produkte, die in Strohhälmchen verpackt sind, nach Anspruch 1, dadurch gekennzeichnet, dass der Wagenträger (3) für Strohhälmchen (4) so angeordnet ist, dass die Strohhälmchen (4) horizontal liegen.

8. Vorrichtung zum Einfrieren biologischer Produkte nach einem der Ansprüche 1, 2, 4, 7, dadurch gekennzeichnet, dass der Wagenträger (3) für die Strohhälmchen (4) geregelt gleitend (23) gemäss der Längsrichtung der Strohhälmchen (4) angebracht ist.

## Claims

1. Device for freezing biological products contained in straws (4), comprising a thermal insulation enclosure (1) with an access door (2), a support carriage (3) for biological straws adapted to receive the said straws (4) parallel to each other, controlled cooling means causing the intervention of a liquid nitrogen injector (7), if appropriate a heating device for fine adjustment of the said cooling action, a means for stirring the gaseous atmosphere, characterised in that it incorporates a crystallisaton inductor of elongated form (10) associated with means (11–12) for displacing the said inductor which displace the said inductor from a deep cooling reception cradle (16) to a transverse position resting on the said straws (4).

2. Device for freezing biological products contained in straws according to claim 1, characterized in that the crystallisation inductor is a metal bar (10) carried by shifting arms (11–12).

3. Device for freezing biological products contained in straws according to claim 2, characterized in that the displacing levers (11–12) are mounted on a shaft (13) passing through the enclosure wall (1) and actuated by a motor (14).

4. Device for freezing biological products contained in straws according to any one of the claims 1 to 3, characterised in that the shifting means (11–12 and 13–14) are arranged in such a way that the terminal displacement of the crystallisation inductor (10) towards the support (3) of straws (4) occurs downwards from above.

5. Device for freezing biological products contained in straws according to any one of the claims 1 to 4, characterised in that the reception cradle (16) incorporates an exchanger tube (17–18) connected in series with the liquid nitrogen supply pipe (8) for the injector (7), the said pipe incorporating a common feed/stop valve.

6. Device for freezing biological products contained in straws according to any one of the claims 1 to 5, characterised in that a thermal probe in the form of a flexible wire is adapted for engagement within a straw.

7. Device for freezing biological products contained in straws according to claim 1, characterized in that the support carriage (3) for straws (4) is so arranged that the straws (4) are horizontal.

8. Device for freezing biological products according to any one of the claims 1, 2, 4, 7, characterised in that the support carriage (3) for the straws (4) is mounted for controlled sliding (23) in the longitudinal direction of the straws (4).

FIG.1

FIG.2

0 150 146

FIG.3

FIG.4

FIG.5